# EUROPEAN PATENT APPLICATION

(11) **EP 4 792 921 A2**
(43) Date of publication of application: **19.08.2026**
(21) Application number: 26151501.9
(22) Date of filing: 13.01.2026
(51) Int. Cl.: B01F 29/20, B01F 29/62, B01F 35/32, B01F 35/42

(54) **HOLDING SYSTEM AND METHOD FOR A BUCKET CONFIGURED TO RECEIVE EPOXY FROM AN ADHESIVE METER MIX MACHINE**

(30) Priority: 24.01.2025 US 202519036527
(71) Applicant: The Boeing Company, Arlington, VA 22202 (US)
(72) Inventor: Hughes, Brandon David, Arlington, VA, 22202 (US)
(74) Representative: Hoffmann Eitle

(57) **Abstract**

A holding system (108) is configured to hold a bucket (110). The bucket (110) is configured to receive adhesive fluid (106) from an adhesive meter mix machine (102). The holding system includes a base (112) including a main body, and a stem (130) extending from the main. The stem (130) includes an extension beam and a bent arm that is angled in relation to the extension beam. A holder is rotationally coupled to the bent arm. The holder is configured to retain the bucket (110).

## Description

### FIELD OF THE DISCLOSURE

Examples of the present disclosure generally relate to holding systems and methods for a bucket configured to receive adhesive fluid, such as epoxy, from an adhesive meter mix machine.

### BACKGROUND OF THE DISCLOSURE

An adhesive meter mix machine dispenses epoxy into cartridges for use in manufacturing assembly processes. The adhesive meter mix machine typically purges out of a dispensing port in intervals to prevent clogging. The purged material accumulates in a stationary bucket located below the dispensing tip.

As the purged material accumulates in higher volumes, the material can emit gases and fume, thereby causing odors in the vicinity. As the purged epoxy material accumulates in large volumes and cures within the bucket, an exothermic reaction can be generated, which can lead to overheating, production of fumes, and hazardous waste. Accordingly, operation of the adhesive meter mix machine typically needs to be frequently halted, so that the bucket can be replaced to mitigate such drawbacks.

### SUMMARY OF THE DISCLOSURE

A need exists for a system and a method for efficiently and effectively operating an adhesive meter mix machine. Further, a need exists for a system and a method that eliminate, minimize, or otherwise reduce a potential of hazardous waste during operation of an adhesive meter mix machine. Also, a need exists for a system and a method that allow a bucket that retains purged epoxy from an adhesive meter mix machine to be quickly and easily discarded, such as into a conventional garbage bin.

With those needs in mind, certain examples of the present disclosure provide a holding system configured to hold a bucket. The bucket is configured to receive adhesive fluid from an adhesive meter mix machine. The holding system includes a base including a main body, and a stem extending from the main. The stem includes an extension beam and a bent arm that is angled in relation to the extension beam. A holder is rotationally coupled to the bent arm. The holder is configured to retain the bucket.

In at least one example, a ring retains the base. For example, the main body of the base can include a lower annular disk that fits within an opening of the ring, and an upper shelf that extends over the lower annular disk. The upper shelf provides an upper lip that seats over upper edges of the ring.

In at least one example, the bent arm is adjustable in relation to the extension beam to allow for adjustment of an angle between the bent arm and the extension beam. For example, the bent arm can be pivotally coupled to the extension beam.

In at least one example, a bearing is fixed within a channel of the holder. The bearing is also rotationally coupled to the bent arm. As a further example, the bent arm includes a nub at a distal end, and the bearing is rotationally coupled to the nub. As a further example, the bearing includes an inner diameter tube that rotationally secures around the nub, and an outer diameter tube securely fixed within the channel. As a further example, a base of the nub can include a lip to provide a gap to allow for rotation of a bearing.

In at least one example, the holder includes a flat lower panel, and one or more retaining walls upwardly extending from a periphery of the flat lower panel.

Certain examples of the present disclosure provide a system including an adhesive meter mix machine configured to emit adhesive fluid, a bucket, and a holding system, as described herein.

Certain examples of the present disclosure provide a method including emitting adhesive fluid from an adhesive meter mix machine; and receiving the adhesive fluid within a bucket coupled to a holder that rotationally coupled to a base at an angle, wherein said receiving the adhesive fluid within the bucket causes the bucket and holder to rotate in relation to the base.

### BRIEF DESCRIPTION OF THE DRAWINGS

Figure 1 illustrates a simplified schematic of a system, according to an example of the present disclosure.
Figure 2 illustrates an isometric view of a holding system from a first side, according to an example of the present disclosure.
Figure 3 illustrates an isometric view of the holding system of Figure 2 from a second side.
Figure 4 illustrates an isometric top view of a base, according to an example of the present disclosure.
Figure 5 illustrates an isometric bottom view of the base of Figure 4.
Figure 6 illustrates an isometric top view of a holder, according to an example of the present disclosure.
Figure 7 illustrates an isometric bottom view of the holder of Figure 6.
Figure 8 illustrates a perspective view of a bearing rotationally coupled to a stem of the base, according to an example of the present disclosure.
Figure 9 illustrates a perspective bottom view of the holder, according to an example of the present disclosure.
Figure 10 illustrates a lateral view of the base, according to an example of the present disclosure.
Figure 11 illustrates a lateral view of the base, according to an example of the present disclosure.
Figure 12 illustrates a perspective lateral view of the holding system holding a bucket, according to an example of the present disclosure.
Figure 13 illustrates a perspective top view of the holding system holding the bucket.
Figure 14 illustrates a perspective internal view of the bucket, according to an example of the present disclosure.
Figure 15 illustrates a flow chart of a method, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

As described herein, examples of the present disclosure provide a holding system for a bucket that is configured to receive epoxy (such as purged epoxy) from an adhesive meter mix machine. The holding system includes an angled rotational mechanism including a base, a holder, and a bearing configured to facilitate rotation of a bucket to ensure even distribution of a material, such as epoxy, in the bucket. The base can be configured so that an upper lip rests on top of existing holder ring, with a lower extrusion disposed and retained within the ring for stability. The base includes a stem having a bent arm, which is angled with respect to an extension beam. The bent arm includes a nub that rotationally retains the bearing. The holder includes a flat lower panel and walls that upwardly extend from a periphery of the lower panel. A lower portion of the bucket is retained by the lower panel and the walls. The holder also includes a channel formed in a bottom surface of the lower panel. The channel is configured to receive and retain the bearing. During operation of the adhesive meter mix machine, as epoxy is deposited into the bucket, the force of the weight of the epoxy on inner surfaces of a wall of the bucket creates torque, rotates the bucket and holder, and allows the epoxy to be distributed around inner surfaces of the bucket, instead of accumulating at a bottom of the bucket. In at least one example, an angle of the bent arm in relation to the extension beam can be adjustable, thereby allowing customization based on a viscosity or a volume of material to enable control over the rotation speed and distribution pattern.

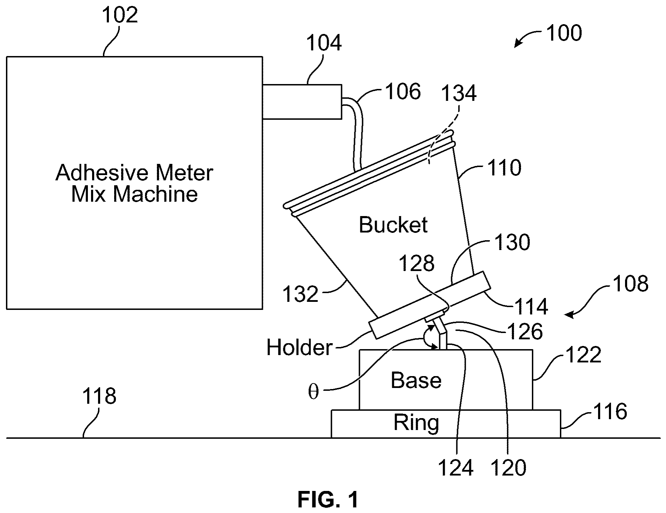

Figure 1 illustrates a simplified schematic of a system 100, according to an example of the present disclosure. The system 100 includes an adhesive meter mix machine 102 having a dispensing port 104. The adhesive meter mix machine 102 emits or otherwise outputs an adhesive fluid 106, such as epoxy, from the dispensing port 104.

The system 100 further includes a holding system 108 configured to hold a bucket 110 that receives the adhesive fluid 106, such as during purging intervals. The holding system 108 includes a base 112, and a holder 114 coupled to the base 112. The base 112 can be retained by a ring 116, which can be supported on a floor 118. For example, the base 112 can include a lower portion that fits within an opening of the ring 116, and an upper lip that seats over upper edges of the ring 116. Optionally, the holding system 108 may not include the ring 116. Instead, the base 112 may be supported on the floor 118 (or another support surface, such as a table) without the ring 116.

The base 112 includes a stem 130 upwardly extending from a main body 122. The stem 130 includes an extension beam 124 which upwardly extends from the main body 122. The extension beam 124 can be coaxial with the main body 122. The stem 130 also includes a bent arm 126, which upwardly extends from the extension beam 124 at an angle Θ. That is, the bent arm 126 is not coaxial with the extension beam 124. Instead, the angle Θ can be an obtuse angle, such as between 100-160 degrees. As an example, the angle Θ can be 135 degrees. As another example, the angle Θ can be 150 degrees. In at least one example, the extension beam 124 and the bent arm 126 are fixed in position, thereby fixing the angle Θ. Optionally, the bent arm 126 can be adjustable in relation to the extension beam 124 (such as by a pivotal connection) to allow for adjustment of the angle Θ.

A bearing 128 is rotationally coupled to a distal end of the bent arm 126, such as at a nub. The bearing 128 is configured to rotate about a longitudinal axis of the bent arm 126. The bearing 128 is further coupled to the holder 114. For example, the bearing 128 is disposed within a reciprocal channel of the holder 114. The reciprocal channel rotationally constrains the bearing 128. For example, the bearing 128 can be threadably secured within the reciprocal channel. As another example, the bearing 128 can be adhesively secured within the reciprocal channel. As another example, the bearing 128 can be secured within the reciprocal channel through an interference fit. As another example, the bearing 128 can be integrally molded and formed with the holder 114. Because the bearing 128 is fixed to the holder 114, rotation of the bearing 128 causes a corresponding rotation of the holder 114 (and vice versa).

As shown, the holder 114 is coupled to the base 112 by the stem 120 at an angle, such as the angle Θ. Accordingly, the bucket 114, which is retained by the holder 114, is also at the angle. Neither the holder 114, nor the bucket 114 is disposed at an upright, normal orientation in relation to the main body 122 of the base 112 or the support surface, such as the floor 118.

The bucket 110 includes a lower basin 130 and a retaining wall 132 upwardly extending from the lower basin 130. A retaining chamber 134 is defined between the lower basin 130 and the retaining wall 132.

In operation, as the adhesive fluid 106 emitted from the dispensing port 104 of the adhesive meter mix machine 102 contacts an interior surface of the retaining wall 132, the weight of the deposited adhesive fluid 106 on the interior surface causes the bucket 110 and the holder 114 to rotate about the longitudinal axis of the of the bent arm 126. As additional adhesive fluid 106 is deposited into the bucket 110, the bucket 110 and the holder 114 continue to rotate, thereby distributing the deposited adhesive fluid 106 around an interior surface of the bucket 110, instead of accumulating on the lower basin 130. As such, the deposited adhesive fluid 106 is less susceptible to exothermically reacting to generate heat and gas. Consequently, an individual can operate the adhesive meter mix machine 102 for longer periods (in contrast to using a stationary bucket to collect the deposited adhesive fluid 106), and the bucket 110 having the deposited adhesive fluid 106 can be quickly, readily, and easily disposed of (such as within a garbage bin), as the deposited adhesive fluid 106 does not produce hazardous waste.

As described herein, the holding system 108 is configured to hold the bucket 110, which is configured to receive the adhesive fluid 106 from the adhesive meter mix machine 102. The holding system 108 includes the base 112 including the main body 122, and the stem 120 extending from the main body 122. The stem 120 includes the extension beam 124 and the bent arm 126, which is angled in relation to the extension beam 124. The holder 114 is rotationally coupled to the bent arm 126. The holder 114 is configured to retain the bucket 110.

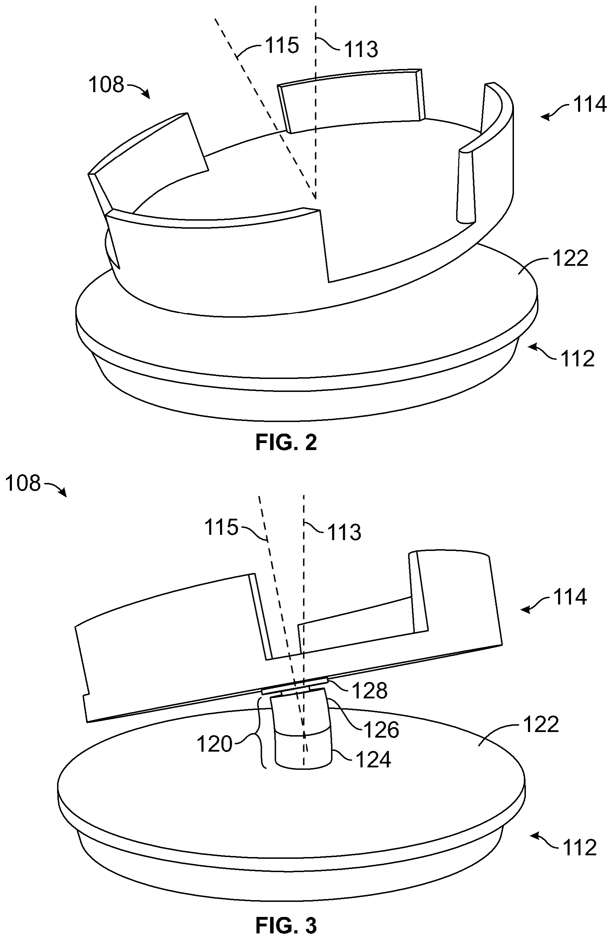

Figure 2 illustrates an isometric view of the holding system 108 from a first side, according to an example of the present disclosure. Figure 3 illustrates an isometric view of the holding system 108 of Figure 2 from a second side. Referring to Figures 2 and 3, the holder 114 is rotationally coupled to the stem 120 at an angle. In particular, a central axis 113 of the base 112 is not coaxial with, nor parallel to a central axis 115 of the holder 114. Instead, the central axis 115 of the holder 114 is angled in relation to the central axis 113 of the base 112.

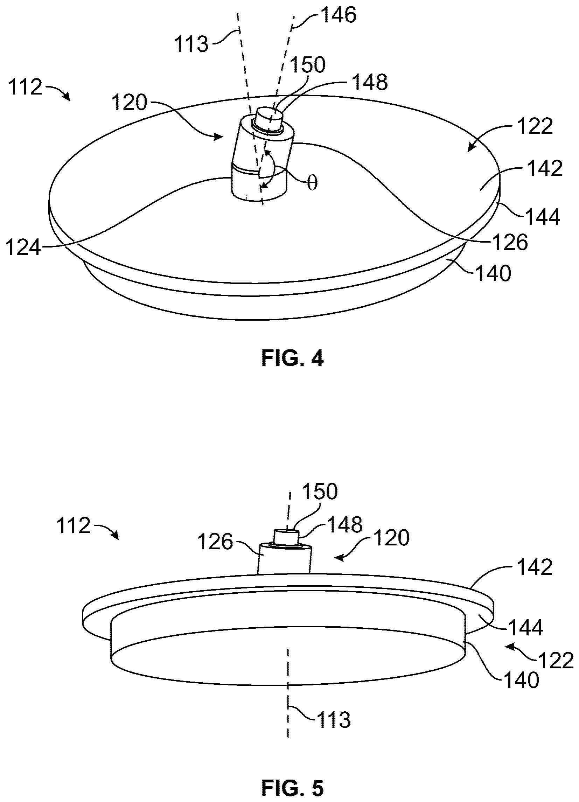

Figure 4 illustrates an isometric top view of the base 112, according to an example of the present disclosure. Figure 5 illustrates an isometric bottom view of the base 112 of Figure 4. Referring to Figures 4 and 5, in at least one example, the base 112 includes a lower annular disk 140, which can fit within an opening of the ring 116. The main body 122 also includes an upper shelf 142 that extends over the disk 140. An upper shelf 142 provides an upper lip 144, which circumferentially extends outwardly away from the disk 140. The upper lip 144 can seat over upper edges of the ring 116 (shown in Figure 1). Optionally, the base 112 may include a main body 122 without an overhanging upper lip.

The stem 120 upwardly extends from a main body 122. The stem 120 includes the extension beam 124 which upwardly extends from the main body 122. The extension beam 124 can be coaxial with the central axis 113 of the main body 122. Optionally, the extension beam 124 can be offset from the central axis 113. The stem 120 also includes the bent arm 126, which upwardly extends from the extension beam 124 at an angle Θ. In particular, the bent arm 126 includes a longitudinal axis 146, which is angled with respect to the extension beam 124. The longitudinal axis 146 is at the angle Θ with respect to the central axis 113. Accordingly, the bent arm 126 is not coaxial with the extension beam 124. In at least one example, the angle Θ is an obtuse angle, such as between 100-160 degrees. As an example, the angle Θ can be 135 degrees. As another example, the angle Θ can be 150 degrees.

A distal end 148 of the bent arm 126 includes a nub 150 (such as a cylindrical stud or other such protuberance), which has a smaller diameter than majority of the bent arm 126. In at least one example, nub 150 integrally molded and formed with the bent arm 126 As another example, the nub 150 is part of a metal pin received and retained within a central channel of the bent arm 126. The nub 150 is configured to rotationally retain the bearing 128 (shown in Figures 1 and 3, for example).

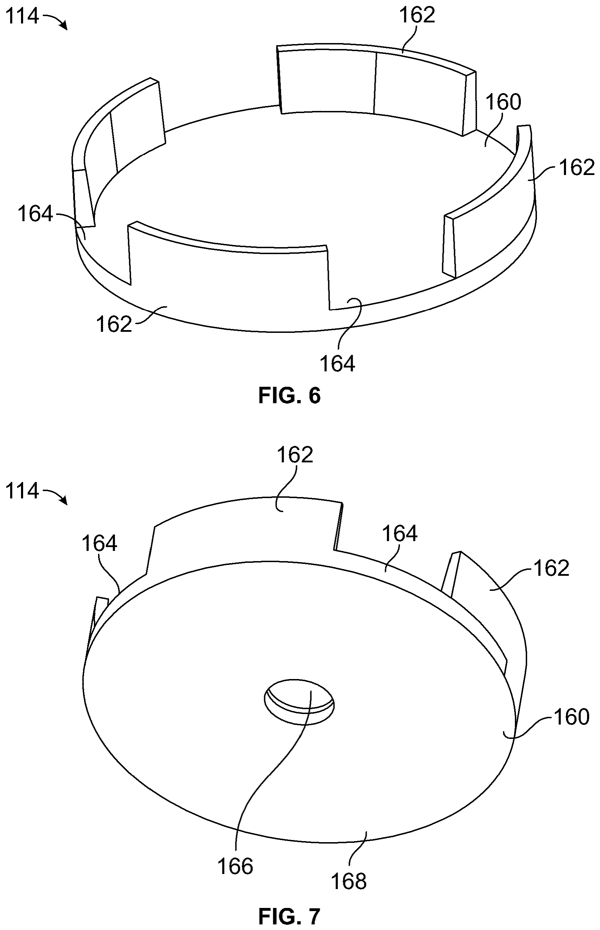

Figure 6 illustrates an isometric top view of a holder 114, according to an example of the present disclosure. Figure 7 illustrates an isometric bottom view of the holder 114 of Figure 6. Referring to Figures 6 and 7, the holder 114 includes a flat lower panel 160 and retaining walls 162 that upwardly extend from a periphery 164 of the lower panel 160. The retaining walls 164 can be curved and follow a contour of the periphery 164. The holder 114 can include the regularly-spaced retaining walls 162. The holder 114 can include four retaining walls 162. Optionally, the holder 114 can include fewer (such as two) or more (such as six) retaining wall 162. In another example, a single, contiguous retaining wall 162 can extend upwardly around a circumference of the holder 114. As another example, instead of retaining walls, the holder 114 can include a circumferential groove formed in the lower panel 160. The groove is configured to receive and retain a lower rim extending from lower basin 130 of the bucket 110 (shown in Figure 1). The lower portion of the bucket 110 is retained by the lower panel 160 and the retaining walls 162 of the holder 114.

As shown in Figure 7, the holder 114 also includes a channel 166 formed in a bottom surface 168 of the lower panel 160. The bearing 128 (shown in Figures 1 and 3, for example) has an upper portion that is secured within the channel 166.

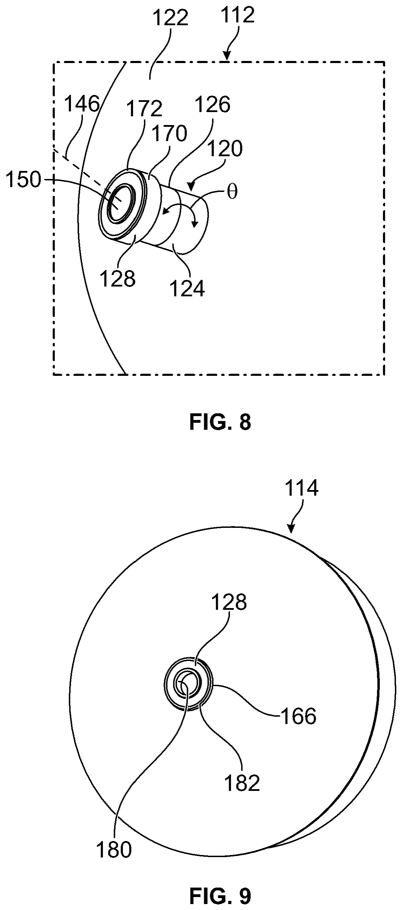

Figure 8 illustrates a perspective view of the bearing 128 rotationally coupled to the stem 120 of the base 112, according to an example of the present disclosure. The bearing 128 includes an outer ring 170 and an upper cap 172 that rotationally couple to the nub 150. The bearing 128 is configured to rotate about the longitudinal axis 146 of the bent arm 126.

Figure 9 illustrates a perspective bottom view of the holder 114, according to an example of the present disclosure. The bearing 128 is fixed within the channel 166 of the lower panel 160. Referring to Figures 8 and 9, the bearing 128 includes an inner diameter tube 180 that rotationally secures around the nub 150, and an outer diameter tube 182 securely fixed (such as via threads, adhesives, interference fit, and/or the like) within the channel 166.

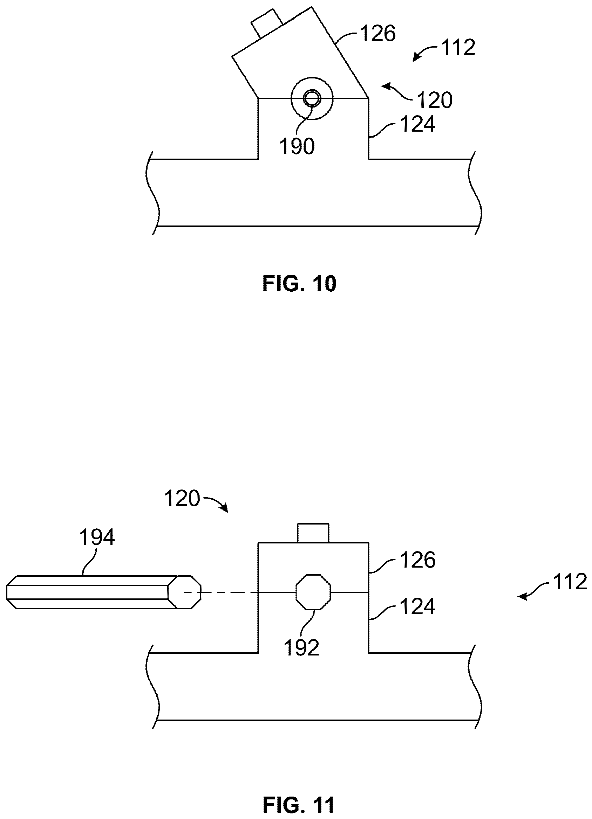

Figure 10 illustrates a lateral view of the base 112, according to an example of the present disclosure. The stem 120 can be adjustable in order to provide a desired angle between the bent arm 126 and the extension beam 124. For example, the bent arm 126 can be pivotally coupled to the extension beam 124 by a pivot pin 190. A ratchet, pawl, or the like can secure an orientation of the bent arm 126 relative to the extension beam 124.

Figure 11 illustrates a lateral view of the base 112, according to an example of the present disclosure. As shown, the bent arm 126 the extension beam 124 can align together at coaxial channels 192, such as hexagonal or octagonal channels. A reciprocal securing pin 194 can be disposed into the aligned channels 192 to secure the bent arm 126 at a desired orientation in relation to the extension beam 124.

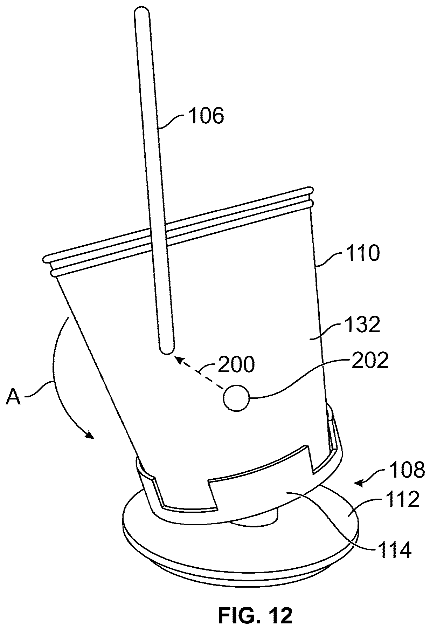

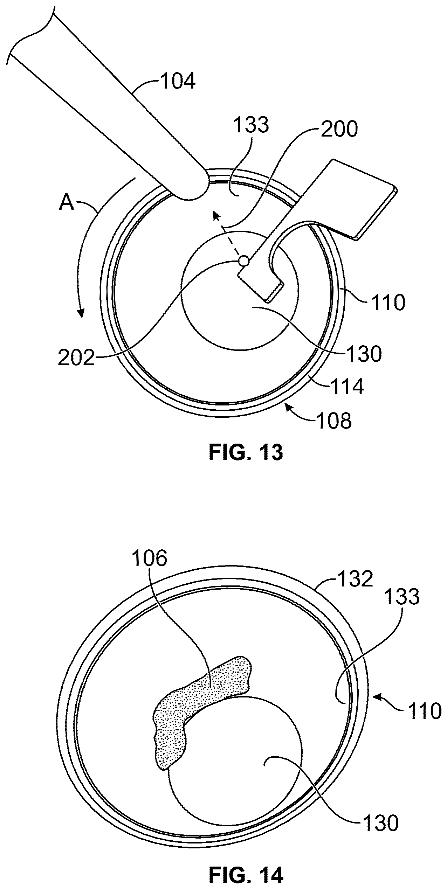

Figure 12 illustrates a perspective lateral view of the holding system 108 holding the bucket 110, according to an example of the present disclosure. Figure 13 illustrates a perspective top view of the holding system 108 holding the bucket 110. Referring to Figures 12 and 13, as the adhesive fluid 106 (such as epoxy) emitted from the dispensing port 104, and is deposited onto an interior surface 133 of the retaining wall 132 of the bucket 110, a moment arm 200 extending from a center of rotation 202 to the interior surface 133 on which the adhesive fluid 106 is deposited causes the bucket 110 and the holder 114 to rotate in the direction of arc A. The weight of the adhesive fluid 106 deposited onto the interior surface 133 causes the bucket 110 and the holder 114 to rotate about the longitudinal axis of the of the bent arm 126 in the direction of arc A.

Figure 14 illustrates a perspective internal view of the bucket 110, according to an example of the present disclosure. Referring to Figures 12-14, as additional adhesive fluid 106 is deposited into the bucket 110, the bucket 110 and the holder 114 continue to rotate, thereby distributing the deposited adhesive fluid 106 around the interior surface 133 of the bucket 110 (as shown in Figure 14), instead of accumulating on the lower basin 130. The adhesive fluid 106 deposited into the bucket 110 is less susceptible to exothermically reacting to emit heat and gas.

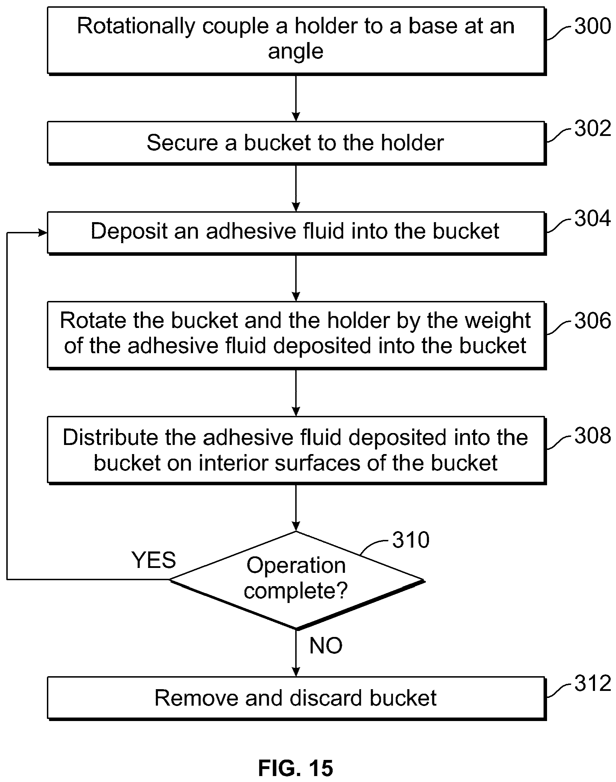

Figure 15 illustrates a flow chart of a method, according to an example of the present disclosure. Referring to Figures 1-15, at 300, the holder 114 is rotationally coupled to the base 112 at an angle, such as the angle θ. At 302, the bucket 110 is secured to the holder 114, such that rotation of the bucket 110 causes a corresponding rotation of the holder 114 (and vice versa).

At 304, the adhesive fluid 106 is output by the adhesive meter mix machine 102 and deposited into the bucket 110. At 306, the weight of the adhesive fluid 106 deposited into the bucket 110 (for example, onto the interior surfaces 133 of the wall 132) causes the bucket 110 and the holder 114 to rotate. At 308, the adhesive fluid 106 deposited into the bucket 110 on the interior surfaces 133 distributes the adhesive fluid on the interior surfaces 133 (as the bucket 110 continues to rotate due to the weight of the deposited adhesive fluid 106).

At 310, it is determined if operation of the adhesive meter mix machine 102 is to be continued. If so, the method returns to 304. If not, the method proceeds from 310 to 312, at which the bucket 110 is removed from the holder 114, and discarded in a conventional manner (for example, without the need for heightened hazardous waste protections), such as into a garbage bin.

As described herein, the angled holder 114 provides a rotational mechanism that allows the bucket 110 to rotate via gravity as the adhesive fluid 106 is deposited into the bucket, thereby ensuring even distribution of the deposited material within the bucket 110. The even distribution of the deposited material reduces the material volume in any one area, preventing excessive heat buildup and minimizing the risk of off-gassing.

Further, the disclosure comprises examples according to the following clauses:

Clause 1. A holding system configured to hold a bucket, wherein the bucket is configured to receive adhesive fluid from an adhesive meter mix machine, the holding system comprising:
a base including a main body, and a stem extending from the main body, wherein the stem comprises an extension beam and a bent arm that is angled in relation to the extension beam; and
a holder rotationally coupled to the bent arm, wherein the holder is configured to retain the bucket.

Clause 2. The holding system of Clause 1, further comprising a ring that retains the base.

Clause 3. The holding system of Clause 2, wherein the main body of the base comprises:
a lower annular disk that fits within an opening of the ring; and
an upper shelf that extends over the lower annular disk, wherein the upper shelf provides an upper lip that seats over upper edges of the ring.

Clause 4. The holding system of any of Clauses 1-3, wherein the bent arm is adjustable in relation to the extension beam to allow for adjustment of an angle between the bent arm and the extension beam.

Clause 5. The holding system of Clause 4, wherein the bent arm is pivotally coupled to the extension beam.

Clause 6. The holding system of any of Clauses 1-5, further comprising a bearing, wherein the bearing is fixed within a channel of the holder, and wherein the bearing is rotationally coupled to the bent arm.

Clause 7. The holding system of Clause 6, wherein the bent arm comprises a nub at a distal end, and wherein the bearing is rotationally coupled to the nub.

Clause 8. The holding system of Clause 7, wherein the bearing comprises:
an inner diameter tube that rotationally secures around the nub; and
an outer diameter tube securely fixed within the channel.

Clause 9. The holding system of any of Clauses 1-8, wherein the holder comprises:
a flat lower panel; and
one or more retaining walls upwardly extending from a periphery of the flat lower panel.

Clause 10. A system comprising:
an adhesive meter mix machine configured to emit adhesive fluid;
a bucket; and
a holding system holding the bucket, wherein the bucket is configured to receive the adhesive fluid from the adhesive meter mix machine, the holding system comprising:
   a base including a main body, and a stem extending from the main body, wherein the stem comprises an extension beam and a bent arm that is angled in relation to the extension beam; and
   a holder rotationally coupled to the bent arm, wherein the holder retains the bucket.

Clause 11. The system of Clause 10, wherein the holder system further comprises a ring that retains the base.

Clause 12. The system of Clause 11, wherein the main body of the base comprises:
a lower annular disk that fits within an opening of the ring; and
an upper shelf that extends over the lower annular disk, wherein the upper shelf provides an upper lip that seats over upper edges of the ring.

Clause 13. The system of any of Clauses 10-12, wherein the bent arm is adjustable in relation to the extension beam to allow for adjustment of an angle between the bent arm and the extension beam.

Clause 14. The system of Clause 13, wherein the bent arm is pivotally coupled to the extension beam.

Clause 15. The system of any of Clauses 10-14, wherein the holding system further comprises a bearing, wherein the bearing is fixed within a channel of the holder, and wherein the bearing is rotationally coupled to the bent arm.

Clause 16. The system of Clause 15, wherein the bent arm comprises a nub at a distal end, and wherein the bearing is rotationally coupled to the nub.

Clause 17. The system of Clause 16, wherein the bearing comprises:
an inner diameter tube that rotationally secures around the nub; and
an outer diameter tube securely fixed within the channel.

Clause 18. The system of any of Clauses 10-17, wherein the holder comprises:
a flat lower panel; and
one or more retaining walls upwardly extending from a periphery of the flat lower panel.

Clause 19. A method comprising:
emitting adhesive fluid from an adhesive meter mix machine; and
receiving the adhesive fluid within a bucket coupled to a holder that is rotationally coupled to a base at an angle, wherein said receiving the adhesive fluid within the bucket causes the bucket and holder to rotate in relation to the base.

Clause 20. The method of Clause 19, wherein the base includes a main body, and a stem extending from the main body, wherein the stem comprises an extension beam and a bent arm that is angled in relation to the extension beam, and wherein the holder is rotationally coupled to the bent arm.

As described herein, examples of the present disclosure provide systems and methods for efficiently and effectively operating an adhesive meter mix machine. Further, examples of the present disclosure provide systems and methods that eliminate, minimize, or otherwise reduce a potential of hazardous waste during operation of an adhesive meter mix machine. Also, examples of the present disclosure provide systems and methods that allow a bucket that retains purged epoxy from an adhesive meter mix machine to be quickly and easily discarded, such as into a conventional garbage bin.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A holding system (108) configured to hold a bucket (110), wherein the bucket (110) is configured to receive adhesive fluid (106) from an adhesive meter mix machine (102), the holding system (108) comprising:
a base (112) including a main body (122), and a stem (130) extending from the main body (122), wherein the stem (130) comprises an extension beam (124) and a bent arm (126) that is angled in relation to the extension beam (124); and
a holder (114) rotationally coupled to the bent arm (126), wherein the holder (114) is configured to retain the bucket (110).

2. The holding system of claim 1, wherein a central axis (115) of the holder (114) is angled in relation to the central axis (113) of the base (112).

3. The holding system (108) of claim 1 or 2, further comprising a ring (116) that retains the base (112).

4. The holding system (108) of claim 3, wherein the main body (122) of the base (112) comprises:
a lower annular disk (140) that fits within an opening of the ring (116); and
an upper shelf (142) that extends over the lower annular disk (140), wherein the upper shelf (142) provides an upper lip (144) that seats over upper edges of the ring (116).

5. The holding system (108) of any one of the preceding claims, wherein the bent arm (126) is adjustable in relation to the extension beam (124) to allow for adjustment of an angle (Θ) between the bent arm (126) and the extension beam (124).

6. The holding system (108) of claim 5, wherein the bent arm (126) is pivotally coupled to the extension beam (124).

7. The holding system (108) of claim 5 or 6, further comprising means for securing an orientation of the bent arm (126) relative to the extension beam (124).

8. The holding system (108) of any one of the preceding claims, further comprising a bearing (128), wherein the bearing (128) is fixed within a channel (166) of the holder (114), and wherein the bearing (128) is rotationally coupled to the bent arm (126).

9. The holding system (108) of claim 8, wherein the bent arm (126) comprises a nub (150) at a distal end, and wherein the bearing (128) is rotationally coupled to the nub (150).

10. The holding system (108) of claim 9, wherein the bearing (128) comprises:
an inner diameter tube (180) that rotationally secures around the nub (150); and
an outer diameter tube (182) securely fixed within the channel (166).

11. The holding system (108) of any one of the preceding claims, wherein the holder (114) comprises:
a flat lower panel (160); and
one or more retaining walls (162) upwardly extending from a periphery of the flat lower panel (160).

12. A system (100) comprising:
an adhesive meter mix machine (102) configured to emit adhesive fluid (106);
a bucket (110); and
a holding system (108) according to any one of claims 1-11, the holding system (108) holding the bucket (110),
wherein the bucket (110) is configured to receive the adhesive fluid (106) from the adhesive meter mix machine (102), and wherein the holder (114) of the holding system (108) retains the bucket (110).

13. A method comprising:
emitting adhesive fluid (106) from an adhesive meter mix machine (102); and
receiving the adhesive fluid (106) within a bucket (110) coupled to a holder (114) that is rotationally coupled to a base (112) at an angle (Θ), wherein said receiving the adhesive fluid (106) within the bucket (110) causes the bucket (110) and holder (114) to rotate in relation to the base (112).

14. The method of claim 13, wherein the bucket (110) includes a lower basin (130) and a retaining wall (132) upwardly extending from the lower basin (130), and wherein said receiving the adhesive fluid (106) within the bucket (110) includes depositing the adhesive fluid (106) onto an interior surface (133) of the retaining wall (132) of the bucket (110), so that a moment arm (200) extending from a center of rotation (202) to the interior surface (133) on which the adhesive fluid (106) is deposited causes the bucket (110) and the holder (114) to rotate.

15. The method of claim 13 or 14, wherein the base (112) includes a main body (122), and a stem (130) extending from the main body (122), wherein the stem (130) comprises an extension beam (124) and a bent arm (126) that is angled in relation to the extension beam (124), and wherein the holder (114) is rotationally coupled to the bent arm (126).
